# EUROPEAN PATENT SPECIFICATION

(11) **EP 3 310 715 B1**
(45) Date of publication and mention of the grant of the patent: **30.06.2021**
(21) Application number: 16733316.0
(22) Date of filing: 10.06.2016
(51) Int. Cl.: B01D 21/26, B01D 21/30, B01D 21/32, C02F 1/38, C02F 1/56, C02F 1/66, C02F 101/20, C02F 103/00, E03F 7/10, C02F 9/00, C02F 1/00

(54) **VEHICLE-MOUNTED PORTABLE APPARATUS FOR CLARIFICATION AND DISINFECTION OF WASTEWATER PRODUCED BY THE WASHING OF ROAD DRAINAGE INLETS AND DRAINS AND TUNNELS, AND METHOD FOR CLARIFICATION AND DISINFECTION OF WASTEWATER PRODUCED BY THE WASHING OF ROAD DRAINAGE INLETS AND DRAINS AND TUNNELS**
FAHRZEUGMONTIERTE TRAGBARE VORRICHTUNG ZUR KLÄRUNG UND DESINFEKTION VON ABWASSER AUS DEM WASCHEN VON STRASSENABFLUSSEINLÄSSEN UND ABFLÜSSEN UND TUNNELN SOWIE VERFAHREN ZUR REINIGUNG UND DESINFEKTION VON ABWASSER AUS DEM WASCHEN VON STRASSENABFLUSSEINLÄSSEN UND ABFLÜSSEN UND TUNNELAUSBAU
APPAREIL PORTABLE MONTÉ SUR UN VÉHICULE DESTINÉ À LA CLARIFICATION ET À LA DÉSINFECTION DES EAUX USÉES PRODUITES PAR LE LAVAGE D'ENTRÉES DE DRAINAGE DE ROUTES, DE DRAINS ET DE TUNNELS, ET PROCÉDÉ DESTINÉ À LA CLARIFICATION ET À LA DÉSINFECTION DES EAUX USÉES PRODUITES PAR LE LAVAGE D'ENTRÉES DE DRAINAGE DE ROUTES, DE DRAINS ET DE TUNNELS

(30) Priority: 16.06.2015 IT UB20151424
(43) Date of publication of application: 25.04.2018
(73) Proprietor: Cappellotto S.p.A., 33074 Fontanafredda (Pordenone) (IT)
(72) Inventor: CAPPELLOTTO, Luigi, 31018 Gaiarine (IT)
(74) Representative: Modiano, Micaela Nadia
(86) International application number: PCT/EP2016/063290
(87) International publication number: WO 2016/202694

(56) References cited:
- EP-A1- 2 130 983
- EP-A1- 2 258 663
- WO-A1-2010/142629
- WO-A1-2013/144664
- DE-A1- 4 120 519
- DE-A1-102008 054 727
- FR-A1- 2 731 422
- FR-A1- 2 749 780
- GB-A- 1 027 397
- US-A- 3 480 542
- US-A- 4 490 257
- US-A1- 2012 000 859

## Description

The present invention relates to a vehicle-mounted portable apparatus and method for clarification and disinfection of wastewater produced by the washing of road drainage inlets and drains and tunnels.

Apparatuses for clarification and disinfection of wastewater produced by the washing of road drainage inlets and drains and tunnels which can be transported on vehicles are currently known, see for example document FR2749780.

These apparatuses comprise a recycling system that allows reuse of a fraction of the aspirated water, by way of the separation of a substantial fraction of the suspended solid particles, which otherwise might damage the high-pressure pump or the pipes that are part of such apparatus.

This water recycling system therefore ensures a constant availability of clean water without resorting to external supplies.

Moreover, such a system allows to thicken the sewer wastewater and consequently transport larger quantities of solid material containing minimal fractions of water.

Other water treatment installations and methods are disclosed in EP2258663A1 and US2012/000859.

Although these apparatuses are widespread and appreciated, they are limited to coarse separation by flocculation and subsequent settling of the suspended sludge on the wastewater produced by the washing of road drainage inlets or tunnels, without performing particular treatments to restore the best possible characteristics for the water, as specified in claims 1 and 7.

Furthermore, in these known apparatuses the sludge separated by flocculation is confined in appropriately provided compartments that are difficult to clean.

The aim of the present invention is to provide a vehicle-mounted portable apparatus for clarification and disinfection of wastewater produced by the washing of road drainage inlets and tunnels that is capable of obviating the cited limitations of mobile apparatuses of the known type.

Within this aim, an object of the invention is to provide an apparatus that is capable of a better treatment for purifying recycled water.

Another object of the invention is to provide an apparatus that is simpler to clean than known mobile apparatuses.

A further object of the invention is to provide an apparatus in which the discharge of aspirated and settled sludge is more practical.

This aim, as well as these and other objects that will become better apparent hereinafter, are achieved by a vehicle-mounted portable apparatus for clarification and disinfection of wastewater produced by the washing of road drainage inlets and drains and tunnels, characterized in that it comprises
- a sludge collecting tank, which is divided by means of two partitions into three compartments, a first compartment for aspirated sludge, a second compartment for first filtration sludge, and a third compartment for separated sludge,
- a first filter for coarse filtering of the sludge in the tank,
- a second filter for finer filtration with respect to said first filter,
- a dosage unit for pH adjustment additives,
- mixing means for the addition of additives for purifying and disinfecting the sludge,
- a hydraulic line for connection between said second filter and said mixing means, with sludge transfer pump,
- a cyclone device for separating the water from the sludge,
- collection and settling means for the water separated from the sludge,
- a hydraulic line for the separated water, for connection between said separation cyclone and said collection and settling means for said separated water, a dosage unit for disinfection additives being provided on said hydraulic line for the separated water,
- a hydraulic line for connection between said collection and settling means with a high-pressure pump for propelling the treated water toward uses,
- a hydraulic line for discharging treated water with a turbidity control sensor.

Further characteristics and advantages of the invention will become better apparent from the description of a preferred but not exclusive embodiment of the apparatus according to the invention, illustrated by way of nonlimiting example in the accompanying drawings, wherein:

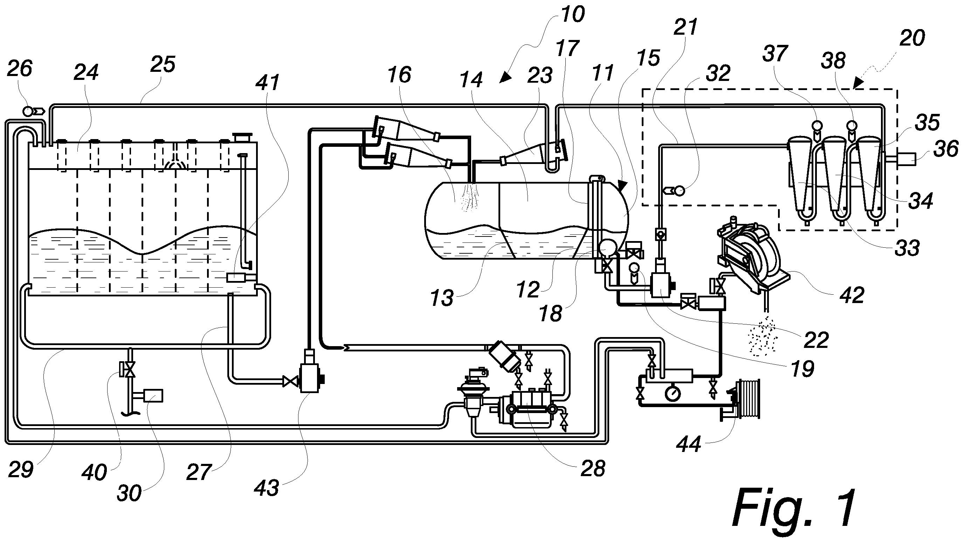

Figure 1 is a schematic view of the apparatus according to the invention.

With reference to the figure, a vehicle-mounted portable apparatus for clarification and disinfection of wastewater produced by the washing of road drainage inlets and drains and tunnels, according to the invention, is designated generally by the reference numeral 10.

Such apparatus 10 comprises:
- a sludge collecting tank 11, which is divided by means of two partitions, a first one 12 and a second one 13, into three compartments, respectively 14, 15 and 16, a first compartment 14 for aspirated sludge, a second compartment 15 for first filtration sludge, and a third compartment 16 for separated sludge,
- a first filter 17 for coarse filtering of the sludge in the tank,
- a second filter 18 for finer filtration with respect to said first filter 17,
- a dosage unit 19 for pH adjustment additives,
- mixing means 20 for the addition of additives for purifying and disinfecting the sludge,
- a hydraulic line 21 for connection between said second filter 18 and the mixing means 20, with sludge transfer pump 22,
- a cyclone device 23 for separating the water from the sludge,
- collection and settling means 24 for the water separated from the sludge,
- a hydraulic line 25 for the separated water, for connection between the separation cyclone 23 and the collection and settling means 24 for the separated water, a dosage unit 26 for disinfection additives being provided on the hydraulic line for the separated water,
- a hydraulic line 27 for connection between said collection and settling means 24 with a high-pressure pump 28 for propelling the water toward generic uses,
- a hydraulic line 29 for discharging treated water with a turbidity control sensor 30.

A cock 40 is connected to the turbidity control sensor 30 and is controlled by means of a clearance given by such sensor 30, which blocks the discharge if the water does not have the minimum characteristics for discharging it into a natural receiving body of water, for example a river, instead of into a pipe directed to a purifier.

The disinfection additive dosage unit 26 reduces the bacteriological burdens and the viruses that are present in the water, making it safe for an operator who might come into contact with it or might inadvertently ingest it, with great advantage for the health of such operator.

The first filter 17, for coarse filtration of the sludge in the tank, in the present constructive example is constituted by the upper part of the second partition 12, which is provided with filtration holes.

The second partition 13 is of the movable or openable type.

The second filter 18, for finer filtration with respect to such first filter 17, is constituted by a rotating filter.

In the embodiment described herein of the apparatus 10 according to the invention, which is a nonlimiting example of said invention, the mixing means 20, for the addition of additives for sludge purification and disinfection, comprise:
- a first dosage unit 32 of additives for separating heavy metals, which is arranged on said hydraulic line 21 for connection between such second filter 18 and the mixing means 20,
- three mixing cyclones 33, 34, 35 connected in series,
- a pH control probe 36 arranged at the output of the last mixing cyclone 35,
- a dosage unit 37 for an anionic polyelectrolyte, arranged between a first mixing cyclone 33 and a second mixing cyclone 34,
- a dosage unit 38 for a cationic polyelectrolyte, arranged between the second mixing cyclone 34 and the third mixing cyclone 35.

The collection and settling means 24 for the water separated from the sludge are constituted by a tank or by a tub or by the water tanks of a transport vehicle.

Inside the collection and settling means 24 there is a redox sensor 41 for controlling the level of oxidation of the water, the measurements of which are used to calibrate appropriately the dosage units of the mixing means 20.

The high-pressure pump 28 is, for example, of the type with plunger pistons, which is adapted to serve a washing unit 42 and 44 of a per se known type, and is preceded by a booster pump 43 that is designed to determine the correct operating pressure at the input of the high-pressure pump 28.

The invention also relates to a vehicle for aspirating liquid waste and for cleaning with high-pressure water, characterized in that it comprises onboard a portable apparatus 10 as described above.

The invention also relates to a method for clarification and disinfection of wastewater produced by the washing of road drainage inlets and tunnels, provided for example with an apparatus 10 as described above, characterized in that it comprises the following operations:
- performing a first coarse filtration of the aspirated sludge,
- performing a second filtration that is finer than the previous first filtration,
- adding additives for pH adjustment,
- adding additives for heavy metal separation,
- performing a first mixing of the second filtration sludge with such additives,
- checking the pH after the first mixing,
- adding an anionic polyelectrolyte,
- performing a second mixing of the sludge that exits from the first mixing with such anionic polyelectrolyte,
- adding a cationic polyelectrolyte,
- performing a third mixing of the sludge that exits from the second mixing with such cationic polyelectrolyte,
- separating the sludge that exits from such third mixing from the water,
- sending the separated water to means for collecting the treated water.

In practice it has been found that the invention achieves the intended aim and objects.

In particular, the invention provides an apparatus that is not limited to coarse separation by flocculation and subsequent settling of the sludge suspended on the wastewater derived from the washing of road tunnels or drainage inlets but is capable of performing the following treatments to restore the best possible characteristics:
- pH reading and neutralization;
- sludge and detergent separation
- heavy metal separation
- water disinfection.

Moreover, the invention provides an apparatus which, during discharge into a natural receiving body of water, constantly monitors the treated water, and which, if such water does not comply with the parameters required by applicable statutory provisions, blocks the discharge, causing the water to be reprocessed.

Furthermore, differently from other systems of the known type, the invention provides an apparatus in which the sludge separated by flocculation remains inside the sludge tank and not in other compartments that are difficult to clean; the sludge in the tank is divided by a movable partition that allows to keep the aspirated sludge and the settled sludge separate and to discharge them simultaneously or separately.

The invention thus conceived is susceptible of numerous modifications and variations, all of which are within the scope of the appended claims.

## Claims

1. A portable apparatus (10) for clarification and disinfection of wastewater produced by the washing of road drainage inlets and drains and tunnels, the apparatus (10) being mountable to a vehicle, comprising
- a sludge collecting tank (11), which is divided by means of two partitions (12, 13) into three compartments (14, 15, 16), a first compartment (14) for aspirated sludge, a second compartment (15) for first filtration sludge, and a third compartment (16) for separated sludge,
- a first filter (17) for coarse filtering of the sludge in the tank sludge collecting tank (11), the first filter (17) being positioned in the sludge collecting tank (11),
- a second filter (18) for finer filtration with respect to said first filter (17), the second filter (18) being positioned in the sludge collecting tank (11),
- a dosage unit (19) for pH adjustment additives,
- mixing means (20) for the addition of additives for purifying and disinfecting the sludge,
- a sludge transfer pump (22) for transfer of the sludge,
- a hydraulic line (21) connecting said second filter (18) and said mixing means (20), with the sludge transfer pump (22),
- a cyclone device (23) for separating the water from the sludge,
- collection and settling means (24) for the water separated from the sludge,
- a hydraulic line (25) for the separated water, for connection between said separation cyclone (23) and said collection and settling means (24) for said separated water, a dosage unit (26) for disinfection additives being provided on said hydraulic line for the separated water,
- a high-pressure pump (28) for propelling the treated water toward uses,
- a hydraulic line (27) for connection between said collection and settling means (24) with the high-pressure pump (28),
- a hydraulic line (29) for discharging treated water with a turbidity control sensor (30).

2. The apparatus according to claim 1, **characterized in that** said first filter (17), for coarse filtering of the sludge in the tank, is constituted by the upper part of the second partition (12), provided with filtration holes.

3. The apparatus according to one or more of the preceding claims, **characterized in that** said second filter (18), for finer filtration with respect to said first filter (17), is constituted by a rotating filter.

4. The apparatus according to one or more of the preceding claims, **characterized in that** said mixing means (20), for the addition of additives for purifying and disinfecting the sludge, comprise:
- a first dosage unit (32) of additives for separating heavy metals, which is arranged on said hydraulic line (21) for connection between said second filter (18) and said mixing means (20),
- three mixing cyclones (33, 34, 35) connected in series,
- a pH control probe (36) arranged at the output of the last mixing cyclone (35),
- a dosage unit (37) for an anionic polyelectrolyte, arranged between a first mixing cyclone (33) and a second mixing cyclone (34),
- a dosage unit (38) for a cationic polyelectrolyte, arranged between said second mixing cyclone (34) and a third mixing cyclone (35).

5. The apparatus according to one or more of the preceding claims, **characterized in that** said collection and settling means (24) for the water separated from the sludge are constituted by a tank or a tub or by water tanks for a transport vehicle.

6. A vehicle for aspirating liquid waste and cleaning with high-pressure water, **characterized in that** it comprises onboard a portable apparatus (10) according to one or more of the preceding claims.

7. A method for clarification and disinfection of wastewater derived from the washing of road drainage inlets and tunnels in a portable apparatus (10) for clarification and disinfection of wastewater, according to claim 1, the apparatus (10) being mountable to a vehicle, the method comprises the following steps:
- providing a sludge collecting tank (11), which is divided by means of two partitions (12, 13) into three compartments (14, 15, 16), a first compartment (14) for aspirated sludge, a second compartment (15) for first filtration sludge, and a third compartment (16) for separated sludge,
- performing a first coarse filtration of the aspirated sludge through a first filter (17) in the tank sludge collecting tank (11), the first filter (17) being positioned in the sludge collecting tank (11),
- performing a second filtration through a second filter (18), which is finer than the previous first filtration, the second filter (18) being positioned in the sludge collecting tank (11),
- transferring sludge by a sludge transfer pump (22) through a hydraulic line (21) connecting said second filter (18) and a mixing means (20), with the sludge transfer pump (22),
- adding additives for pH adjustment by a dosage unit (19),
- adding additives for heavy metal separation by a first dosage unit (32),
- performing a first mixing of the second filtration sludge with said additives by the mixing means (20),
- controlling the pH after first mixing,
- adding an anionic polyelectrolyte,
- performing a second mixing of the sludge that exits from the first mixing with said anionic polyelectrolyte,
- adding a cationic polyelectrolyte,
- performing a third mixing of the sludge that exits from the second mixing with said cationic polyelectrolyte,
- separating from the water the sludge that exits from said third mixing by a cyclone device (23),
- sending the separated water to collection and settling means (24) for collecting the treated water through a hydraulic line (25), and
- adding disinfection additives by a dosage unit (26), the dosage unit (26) being provided on said hydraulic line (25).

## Patentansprüche

1. Eine tragbare Vorrichtung (10) zur Reinigung und Desinfektion von Abwasser aus dem Waschen von Straßenabflusseinlässen und -auslässen und Tunneln, wobei die Vorrichtung (10) an einem Fahrzeug montierbar ist; Folgendes umfassend:
- einen Schlamm-Sammeltank (11), der durch zwei Trennwände (12, 13) in drei Kammern (14, 15, 16) unterteilt ist; eine erste Kammer (14) für angesaugten Schlamm, eine zweite Kammer (15) für Schlamm der ersten Filtration und eine dritte Kammer (16) für getrennten Schlamm;
- einen ersten Filter (17) zur groben Filterung des Schlamms im Tankschlamm-Sammeltank (11), wobei der erste Filter (17) im Schlamm-Sammeltank (11) angebracht ist;
- einen zweiten Filter (18) zur im Vergleich zu dem ersten Filter (17) feineren Filterung, wobei der zweite Filter (18) im Schlamm-Sammeltank (11) angebracht ist;
- eine Dosiereinheit (19) für Zusätze zur Einstellung des pH-Werts;
- Mischmittel (20) zum Hinzufügen von Zusätzen zum Reinigen und Desinfizieren des Schlamms;
- eine Schlamm-Transportpumpe (22) für den Transport des Schlamms;
- eine Hydraulikleitung (21), die den zweiten Filter (18) und die Mischmittel (20) mit der Schlamm-Transportpumpe (22) verbindet;
- eine Zyklonvorrichtung (23) zum Trennen des Wassers vom Schlamm;
- Sammel- und Setzmittel (24) für das vom Schlamm getrennte Wasser;
- eine Hydraulikleitung (25) für das abgetrennte Wasser, zur Verbindung zwischen dem Trennzyklon (23) und den Sammel- und Setzmitteln (24) für das abgetrennte Wasser, eine Dosiereinheit (26) für Desinfektionszusätze, die an der Hydraulikleitung für das abgetrennte Wasser bereitgestellt ist;
- eine Hochdruckpumpe (28) zum Treiben des behandelten Wassers zum Anwendungsbereich;
- eine Hydraulikleitung (27) zur Verbindung zwischen den Sammel- und Setzmitteln (24) mit der Hochdruckpumpe (28);
- eine Hydraulikleitung (29) zum Ablassen behandelten Wassers mit einem Trübheits-Steuerungssensor (30).

2. Die Vorrichtung gemäß Anspruch 1, **dadurch gekennzeichnet, dass** der erste Filter (17) zur Grobfilterung des Schlamms im Tank aus dem oberen Teil der zweiten Trennwand (12), versehen mit Filtrationslöchern, besteht.

3. Die Vorrichtung gemäß einem oder mehreren der obigen Ansprüche, **dadurch gekennzeichnet, dass** der zweite Filter (18) zur im Vergleich mit dem ersten Filter (17) feineren Filterung aus einem Rotationsfilter besteht.

4. Die Vorrichtung gemäß einem oder mehreren der obigen Ansprüche, **dadurch gekennzeichnet, dass** die Mischmittel (20) zum Hinzufügen von Zusätzen für die Reinigung und Desinfektion des Schlamms Folgendes umfassen:
- eine erste Dosiereinheit (32) für Zusätze zum Abscheiden von Schwermetallen, die an der Hydraulikleitung (21) zur Verbindung zwischen dem zweiten Filter (18) und den Mischmitteln (20) angeordnet ist,
- drei Mischzyklone (33, 34, 35), seriell angeschlossen,
- eine pH-Kontrollsonde (36), angeordnet am Ausgang des letzten Mischzyklons (35),
- eine Dosiereinheit (37) für einen anionischen Polyelektrolyten, angeordnet zwischen einem ersten Mischzyklon (33) und einem zweiten Mischzyklon (34),
- eine Dosiereinheit (38) für einen kationischen Polyelektrolyten, angeordnet zwischen dem zweiten Mischzyklon (34) und einem dritten Mischzyklon (35).

5. Die Vorrichtung gemäß einem oder mehreren der obigen Ansprüche, **dadurch gekennzeichnet, dass** die Sammel- und Setzmittel (24) für das vom Schlamm getrennte Wasser aus einem Tank oder einer Wanne oder aus Wassertanks für ein Transportfahrzeug bestehen.

6. Ein Fahrzeug zum Ansaugen von Flüssigabfall und zum Reinigen mit Hochdruckwasser, **dadurch gekennzeichnet, dass** es bordintern eine tragbare Vorrichtung (10) gemäß einem oder mehreren der obigen Ansprüche umfasst.

7. Ein Verfahren zur Reinigung und Desinfektion von Abwasser aus dem Waschen von Straßenabflusseinlässen und Tunneln in einer tragbaren Vorrichtung (10) zur Reinigung und Desinfektion von Abwasser gemäß Anspruch 1, wobei die Vorrichtung (10) an einem Fahrzeug montierbar ist; das Verfahren umfasst die folgenden Schritte:
- das Bereitstellen eines Schlamm-Sammeltanks (11), der durch zwei Trennwände (12, 13) in drei Kammern (14, 15, 16) unterteilt ist; eine erste Kammer (14) für angesaugten Schlamm, eine zweite Kammer (15) für Schlamm der ersten Filtration und eine dritte Kammer (16) für getrennten Schlamm;
- das Durchführen einer ersten groben Filtration des angesaugten Schlamms durch einen ersten Filter (17) im Tankschlamm-Sammeltank (11), wobei der erste Filter (17) im Schlamm-Sammeltank (11) angebracht ist;
- das Durchführen einer zweiten Filtration durch einen zweiten Filter (18), die feiner ist als die vorhergehende erste Filtration, wobei der zweite Filter (18) im Schlamm-Sammeltank (11) angebracht ist;
- das Transportieren von Schlamm mit Hilfe einer Schlamm-Transportpumpe (22) durch eine Hydraulikleitung (21), die den zweiten Filter (18) und ein Mischmittel (20) mit der Schlamm-Transportpumpe (22) verbindet;
- das Hinzufügen von Zusätzen durch eine Dosiereinheit (19) zur Einstellung des pH-Werts;
- das Hinzufügen von Zusätzen durch eine erste Dosiereinheit (32) zur Abscheidung von Schwermetallen;
- ein erstes Mischen des Schlamms zweiter Filtration mit den Zusätzen durch das Mischmittel (20);
- das Kontrollieren des pH-Werts nach dem ersten Mischen;
- das Hinzufügen eines anionischen Polyelektrolyten;
- ein zweites Mischen des Schlamms, der den ersten Mischvorgang verlässt, mit dem anionischen Polyelektrolyten;
- das Hinzufügen eines kationischen Polyelektrolyten;
- ein drittes Mischen des Schlamms, der den zweiten Mischvorgang verlässt, mit dem kationischen Polyelektrolyten;
- das Trennen des Schlamms, der den dritten Mischvorgang verlässt, vom Wasser durch eine Zyklonvorrichtung (23);
- das Befördern des abgetrennten Wassers zu Sammel- und Setzmitteln (24) zum Sammeln des behandelten Wassers durch eine Hydraulikleitung (25) und
- das Hinzufügen von Desinfektionszusätzen durch eine Dosiereinheit (26), wobei die Dosiereinheit (26) an der Hydraulikleitung (25) angeordnet ist.

## Revendications

1. Appareil portable (10) pour la clarification et la désinfection d'eaux usées produites par le lavage d'entrées de drainage de routes et de drains et de tunnels, l'appareil (10) pouvant être monté sur un véhicule, comportant
- un réservoir de collecte de boues (11), qui est divisée au moyen de deux séparations (12, 13) en trois compartiments (14, 15, 16), un premier compartiment (14) pour des boues aspirées, un deuxième compartiment (15) pour des boues de première filtration, et un troisième compartiment (16) pour des boues séparées,
- un premier filtre (17) pour une filtration grossière des boues dans le réservoir de collecte de boues de réservoir (11), le premier filtre (17) étant positionné dans le réservoir de collecte de boues (11),
- un second filtre (18) pour une filtration plus fine par rapport audit premier filtre (17), le second filtre (18) étant positionné dans le réservoir de collecte de boues (11),
- une unité de dosage (19) pour des additifs d'ajustement de pH,
- des moyens de mélange (20) pour l'ajout d'additifs pour purifier et désinfecter les boues,
- une pompe de transfert de boues (22) pour un transfert des boues,
- une conduite hydraulique (21) reliant ledit second filtre (18) et lesdits moyens de mélange (20), à la pompe de transfert de boues (22),
- un dispositif à cyclone (23) pour séparer l'eau des boues,
- des moyens de collecte et de décantation (24) pour l'eau séparée des boues,
- une conduite hydraulique (25) pour l'eau séparée, pour un raccordement entre ledit cyclone de séparation (23) et lesdits moyens de collecte et de décantation (24) pour ladite eau séparée, une unité de dosage (26) pour des additifs de désinfection étant prévue sur ladite conduite hydraulique pour l'eau séparée,
- une pompe à haute pression (28) pour propulser l'eau traitée vers des utilisations,
- une conduite hydraulique (27) pour un raccordement entre lesdits moyens de collecte et de décantation (24) à la pompe à haute pression (28),
- une conduite hydraulique (29) pour évacuer l'eau traitée avec un capteur de contrôle de turbidité (30) .

2. Appareil selon la revendication 1, **caractérisé en ce que** ledit premier filtre (17), pour la filtration grossière des boues dans le réservoir, est constitué de la partie supérieure de la seconde séparation (12), pourvue de trous de filtration.

3. Appareil selon une ou plusieurs des revendications précédentes, **caractérisé en ce que** ledit second filtre (18), pour la filtration plus fine par rapport audit premier filtre (17), est constitué d'un filtre rotatif.

4. Appareil selon une ou plusieurs des revendications précédentes, **caractérisé en ce que** lesdits moyens de mélange (20), pour l'ajout d'additifs pour purifier et désinfecter les boues comporte :
- une première unité de dosage (32) d'additifs pour séparer des métaux lourds, qui est agencée sur ladite conduite hydraulique (21) pour un raccordement entre ledit second filtre (18) et lesdits moyens de mélange (20),
- trois cyclones de mélange (33, 34, 35) raccordés en série,
- une sonde de contrôle de pH (36) agencée à la sortie du dernier cyclone de mélange (35),
- une unité de dosage (37) pour un polyélectrolyte anionique, agencée entre un premier cyclone de mélange (33) et un deuxième cyclone de mélange (34),
- une unité de dosage (38) pour un polyélectrolyte cationique, agencée entre ledit deuxième cyclone de mélange (34) et un troisième cyclone de mélange (35).

5. Appareil selon une ou plusieurs des revendications précédentes, **caractérisé en ce que** lesdits moyens de collecte et de décantation (24) pour l'eau séparée des boues sont constitués d'un réservoir ou d'une cuve ou de réservoirs d'eau pour un véhicule de transport.

6. Véhicule destiné à aspirer des déchets liquides et à effectuer un nettoyage avec de l'eau à haute pression, **caractérisé en ce qu'**il comporte à bord un appareil portable (10) selon une ou plusieurs des revendications précédentes.

7. Procédé de clarification et de désinfection d'eaux usées provenant du lavage d'entrées de drainage de routes et de tunnels dans un appareil portable (10) pour la clarification et la désinfection d'eaux usées, selon la revendication 1, l'appareil (10) pouvant être monté sur un véhicule, le procédé comportant les étapes suivantes consistant à :
- fournir un réservoir de collecte de boues (11), qui est divisé au moyen de deux séparations (12, 13) en trois compartiments (14, 15, 16), un premier compartiment (14) pour des boues aspirées, un deuxième compartiment (15) pour des boues de première filtration, et un troisième compartiment (16) pour des boues séparées,
- réaliser une première filtration grossière des boues aspirées à travers un premier filtre (17) dans le réservoir de collecte de boues de réservoir (11), le premier filtre (17) étant positionné dans le réservoir de collecte de boues (11),
- réaliser une seconde filtration à travers un second filtre (18), qui est plus fine que la première filtration précédente, le second filtre (18) étant positionné dans le réservoir de collecte de boues (11),
- transférer les boues par une pompe de transfert de boues (22) à travers une conduite hydraulique (21) reliant ledit second filtre (18) et lesdits moyens de mélange (20), à la pompe de transfert de boues (22),
- ajouter des additifs pour un ajustement de pH par une unité de dosage (19),
- ajouter des additifs pour une séparation de métaux lourds par une première unité de dosage (32),
- réaliser un premier mélange des secondes boues de filtration avec lesdits additifs par les moyens de mélange (20),
- contrôler le pH après le premier mélange,
- ajouter un polyélectrolyte anionique,
- réaliser un deuxième mélange des boues qui sortent du premier mélange avec ledit polyélectrolyte anionique,
- ajouter un polyélectrolyte cationique,
- réaliser un troisième mélange des boues qui sortent du deuxième mélange avec ledit polyélectrolyte cationique,
- séparer l'eau des boues qui sortent dudit troisième mélange par un dispositif à cyclone (23),
- envoyer l'eau séparée vers des moyens de collecte et de décantation (24) pour collecter l'eau traitée à travers une conduite hydraulique (25), et
- ajouter des additifs de désinfection par une unité de dosage (26), l'unité de dosage (26) étant agencée sur ladite conduite hydraulique (25).
